(19) Europäisches Patentamt
European Patent Office
Office européen des brevets

(11) **EP 1 992 659 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(51) Int Cl.:
***C08K 5/00*** *(2006.01)*  ***C08K 5/3475*** *(2006.01)*

(21) Anmeldenummer: **07108313.3**

(22) Anmeldetag: **16.05.2007**

(54) **Polyamidformmassen-Schmelze zur Herstellung von transparenten Formteilen**

Molten polyamide moulding composition for manufacturing transparent moulded parts

Composition polyamide de moulage à l'état fondu destinée à la fabrication de pièces moulées transparentes

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**19.11.2008 Patentblatt 2008/47**

(73) Patentinhaber: **EMS-Patent AG**
**7013 Domat/Ems (CH)**

(72) Erfinder:
• **Bühler, Friedrich Severin, Dr. rer. nat.**
**7430 Thusis (CH)**

• **Meyer zu Westram, Robert**
**7074 Malix (CH)**

(74) Vertreter: **OK pat AG**
**Industriestrasse 47**
**6300 Zug (CH)**

(56) Entgegenhaltungen:
EP-A- 0 610 155  EP-A1- 1 074 585
WO-A-02/090421  WO-A-2005/025491
US-A- 3 248 247  US-A- 3 988 363
US-A1- 2003 069 388

**Beschreibung**

Die Erfindung betrifft eine Polyamidformmassen-Schmelze mit einem UV-Absorber und ein Verfahren zur Herstellung von transparenten Formteilen, die für Licht bis zu einer Wellenlänge von 400 nm eine reduzierte Transmission aufweisen.

Die Verwendung von UV-Absorbern zur Herstellung von transparenten, für Licht bis zu einer Wellenlänge von 400 nm eine reduzierte Transmission aufweisenden Kunststoff-Produkten ist z.B. aus einem der für die Firma HOYA Corp. (Tokio, Japan) erteilten Patente JP 382 44 55 B2, US 6,441,119 B1, US 6,673,888 B2 oder US 7, 009,025 B2 bekannt. Bei diesen Patenten stellte sich die Aufgabe, einen UV-Schutz bereitzustellen, der im wesentlichen alle UV-Strahlung bis zu einer Wellenlänge von ungefähr 400 nm absorbiert. Gleichzeitig sollte der Yellow-Index möglichst niedrig sein. Dabei wurden unterschiedliche Monomere (Diethylenglykol-Bisallyl-Karbonat, (Thio)Urethan, Thiiren oder Episulfid) zum Herstellen von optischen Linsen verwendet. Als UV-Absorber wurde eine Dibenzoylmethan-Verbindung verwendet, wobei dieser UV-Absorber einem dieser Monomere zugemischt und diese Mischung in eine Form zum Giessen von Linsen eingefüllt und in dieser Form polymerisiert wurde.

Die Aufgabe der vorliegenden Erfindung besteht darin, eine thermoplastisch verarbeitbare Polyamidformmassen-Schmelze mit einem UV-Absorber und ein entsprechendes Verfahren zur Herstellung von transparenten Kunststoff-Produkten bzw. Formteilen vorzuschlagen, die für Licht bis zu einer Wellenlänge von 400 nm eine reduzierte Transmission aufweisen. Bevorzugt weist ein mit einer solchen Polyamidformmassen-Schmelze hergestelltes Formteil einen tiefen Yellow-Index auf. Zudem wird eine erhebliche Reduktion der Transmission bevorzugt, so dass ein hoher UV-Schutz resultiert. Diese Aufgabe wird durch die Merkmale der unabhängigen Ansprüche 1 und 7 erfüllt. Dabei wird eine Polyamidformmassen-Schmelze mit zumindest einem UV-Absorber vorgeschlagen, der ausgewählt ist aus einer Gruppe bestehend aus 1-(4-Metoxyphenyl)-3-(4-tert-butylphenyl)propan-1,3-dion und 2-(4'-Diethylamino-2'-hydroxybenzoyl)benzoesäure-n-hexylester. Diese Polyamidformmassen-Schmelze ist zur Herstellung von transparenten Kunststoff-Produkten bzw. Formteilen, die für Licht bis zu einer Wellenlänge von 400 nm eine reduzierte Transmission aufweisen, geeignet.

Im Zusammenhang mit der vorliegenden Erfindung gelten als "transparente Kunststoff-Produkte" aus transparenten Polyamiden oder deren transparenten Mischungen oder deren transparente Blends mit einem oder mehreren teilkristallinen Polyamiden hergestellte, transparente Formteile bzw. transparente Folien. Die Lichttransmission (gemessen nach ASTM 1003) beträgt dabei mindestens 75 %, bevorzugt mindestens 85 %, besonders bevorzugt mindestens 90 % und ganz besonders bevorzugt mindestens 91 %, wobei die Schichtdicke der gemessenen Formteile 2 mm und die Schichtdicke der gemessenen Folien maximal 800 $\mu$m beträgt. Allgemein werden im Zusammenhang mit dieser Erfindung Folien auch als Formteile bezeichnet, weil diese ebenfalls mit einer Vorrichtung oder einem Werkzeug, z.B. einer Breitschlitzdüse, Kühlwalze. einem Airknife und/oder Elektrospinning, in ihre Form gebracht werden.

Die für die vorliegende Erfindung bevorzugten, teilkristallinen Polyamide sind ausgewählt aus der Gruppe PA 6, PA46, PA49, PA410, PA411, PA412, PA413, PA414, PA415, PA416, PA418, PA436, PA 66, PA 69, PA 610, PA 611, PA 612, PA 613, PA 614, PA 615, PA 616, PA 617, PA 618, PA 66/6, PA 6/66/12, PA 6/12, PA 11, PA 12, PA 912, PA 1212, 6T/6I, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, Polyetheramiden, Polyetheresteramiden und Polyesteramiden oder deren Mischungen oder Copolymeren. Besonders bevorzugt sind dabei teilkristalline Polyamide aus der Gruppe PA 6, PA 612, PA 614, PA 6/66/12, PA 6/12, PA 11, PA 12, Polyetheramide und Polyetheresteramide.

Die Art der transparenten Formteile, Kunstoff-Produkte bzw. Polyamid-Produkte unterliegt keinerlei Beschränkungen. Bevorzugt sind die transparenten Polyamid-Produkte bzw. Formteile ausgewählt aus einer Gruppe, die Sonnenlinsen, korrigierende Linsen, nicht-korrigierende Linsen, Linsen für Brillen, Linsen für optische Geräte und Systeme, Brillenteile, Schutzbrillen, Sicht- und Schutzscheiben, Visiere, Displays, Uhrengläser, Gerätegehäuse, Lampenabdeckungen, Filter und Folien umfasst.

Die transparenten Formteile, Kunststoff-Produkte bzw. Polyamid-Produkte bestehen zu mindestens 50 Gew.-% aus Polyamid, können aber auch Schichten oder Zumischungen anderer Kunststoffe oder Stoffe enthalten, z.B. als funktionelle oder dekorative Beschichtung.

Beim Testen von transparenten Polyamiden mit kommerziell erhältlichen UV-Absorbern stellte sich allerdings heraus, dass die heute weit verbreiteten halogenierten Hydroxyphenylbenztriazole einen starken Gelbstich erzeugen. Der Yellow-Index (Gelbstich) durch die Zugabe von UV-Stabilisatoren nimmt insbesondere dann stark zu, wenn z.B. Linsen im Spritzgussverfahren hergestellt werden. Die hohen Verarbeitungstemperaturen für Polyamide und die sauren und alkalischen Endgruppen dieser Polymeren erschweren das Einstellen einer geringen Verfärbung. Üblicherweise wird deshalb ein Polyamid, das bei der Verarbeitung zur Verfärbung neigt, selbst mit Phosphor Verbindungen, z.B. mit phosphorhaltigen Säuren, wie $H_3PO_2$, $H_3PO_3$, $H_3PO4$ oder deren Salzen geschützt, welche die verwendeten UV-Stabilisatoren nicht angreifen sollen. Die Phosphorverbindungen werden in Mengen von 0,001 bis 0.5 Gew.-%, bevorzugt 0.01 bis 0.1 Gew.-% bezogen auf das Polyamid verwendet. Zur Einarbeitung des UV-Schutzes in die Polyamidformmassen-Schmelze müssen die Stabilisatoren die thermische Belastung bei einer der Verarbeitung vorausgehenden Compoundierung bzw. der Verarbeitung selbst überstehen, wobei die dazu notwendigen Temperaturen bei Polyamiden über 350 °C betragen können.

Beim Testen von transparenten Polyamiden mit kommerziell erhältlichen UV-Absorbern stellte sich zudem heraus, dass die Verarbeitung von Polyamidformmassen, welche halogenierte Hydroxyphenylbenztriazole enthalten, zur Bildung von Ablagerungen in der Plastifiziereinheit bzw. auf der Werkzeugoberfläche führt. Diese Ablagerungen können die Oberflächenqualität der Polyamidformkörper erheblich beeinträchtigen und müssen regelmässig manuell entfernt werden, was jeweils zur Unterbrechung des Produktionsprozesses führt.

Überraschenderweise konnte festgestellt werden, dass UV-Absorber in Form von Verbindungen die mindestens eine substituierte Benzoylgruppe aufweisen, keine sichtbaren Belagsbildungen auf Oberflächen erzeugen, mit denen die diesen UV-Absorber enthaltenden Polyamidformmassen-Schmelzen während der Herstellung oder der Verarbeitung in Kontakt kommen.

Aus diesen Gründen ist die erfindungsgemässe Polyamidformmassen-Schmelze in den Ansprüchen 1 und 7 dadurch gekennzeichnet, dass die Polyamidformmassen-Schmelze mindestens einen UV-Absorber umfasst, wovon zumindest ein UV-Absorber eine Verbindung ist, die mindestens eine substituierte Benzoylgruppe aufweist, ausgewählt aus einer Gruppe bestehend aus 1-(4-Metoxyphenyl)-3-(4-tert-butylphenyl)propan-1,3-dion und 2-(4'-Diethyl-amino-2'-hydroxybenzoyl) benzoesäure-n-hexylester, wobei die diesen zumindest einen UV-Absorber umfassende Polyamidformmassen-Schmelze auf Oberflächen, mit denen sie während der Verarbeitung in Kontakt kommt, keine sichtbare Belagsbildung verursacht.

Die erfindungsgemässen transparenten Polyamid-Produkte bzw. Formteile weisen eine erheblich reduzierte Transmission für Licht mit einer Wellenlänge von 400 nm bzw. von 380 nm auf, so dass ein hoher UV-Schutz resultiert, der dazu geeignet ist, Personen, Tiere, Pflanzen und Güter aller Art vor schädlicher UV-Strahlung zu schützen.

Zusätzliche bevorzugte Weiterbildungen der erfindungsgemässen Polyamidformmassen-Schmelze und weitere erfinderische Merkmale ergeben sich aus den weiteren Ansprüchen.

Die Herstellung der transparenten Polyamide erfolgte in an sich bekannter Weise und in bekannten, rührbaren Druckautoklaven mit einem Vorlagegefäss und einem Reaktionsgefäss:

Im Vorlagegefäss wird deionisiertes Wasser vorgelegt und die Monomere und Additive zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäss gepumpt und dort auf die gewünschte Reaktionstemperatur von 270 bis 350 °C bei einem Druck von maximal 30 bar aufgeheizt. Der Ansatz wird in der Druckphase für 2 bis 4 Stunden auf der Reaktionstemperatur gehalten. In der anschliessenden Entspannungsphase wird der Druck innerhalb von 1 bis 2 Stunden auf atmosphärischen Druck reduziert, wobei die Temperatur leicht sinken kann.

In der folgenden Entgasungsphase wird der Ansatz bei atmosphärischem Druck für 0.5 bis 1 Stunden auf einer Temperatur von 270 bis 350 °C gehalten. Die Polymerschmelze wird in Strangform ausgetragen, im Wasserbad bei 15 bis 80 °C abgekühlt und granuliert. Das Granulat wird für 12 Stunden bei 80 bis 120 °C unter Stickstoffgas auf einen Wassergehalt von weniger als 0.1 Gew.-% getrocknet.

Sollte als Monomer Xylylendiamin verwendet werden, wird sowohl im Vorlagegefäss als auch im Reaktionsgefäss der Druck auf maximal 10 bar, bevorzugt auf maximal 6 bar geregelt.

Die Einstellung der relativen Viskosität und damit der Molmasse kann in an sich bekannter Weise, z.B. über monofunktionelle Diamine oder Dicarbonsäuren, oder mit Hilfe von difunktionellen Diaminen oder Dicarbonsäuren als Kettenregler erfolgen.

Die relative Viskosität (gemessen in 0.5 Gew.-%-iger m-Kresollösung bei 20 °C) der transparenten Polyamide beträgt 1.35 - 2.15, bevorzugt 1.40 - 1.90, besonders bevorzugt 1.45 - 1.85.

Die Glasübergangstemperatur (DSC mit einer Aufheizrate von 20 °C/min) der transparenten Polyamide beträgt 100 - 230 °C, bevorzugt 100 - 200 °C, besonders bevorzugt 130 - 195 °C.

Der Brechungsindex $n_D^{20}$ der transparenten Polyamide beträgt 1.49 - 1.75, bevorzugt 1.49 - 1.67, besonders bevorzugt 1.50 - 1.65 und ganz besonders bevorzugt 1.51 - 1.64.

Das Polyamidgranulat mit Feuchten von weniger als 0.1 Gew.-% wird mit den pulverförmigen UV-Absorbern, einer wässrigen $H_3PO_2$ Lösung und gegebenenfalls Farbpigmenten ca. 30 Minuten in einem verschlossenen Behälter mittels eines sogenannten Taumelmischers gemischt. Die UV-Absorber können dabei auch in Form eines Masterbatches, bevorzugt mit einem transparenten Polyamid als Trägermaterial, zugegeben werden.

Die Ausrüstung des Polyamidgranulats mit UV-Absorbern, wässriger $H_3PO_2$ Lösung und gegebenenfalls Farb-pigmenten kann auch mittels einer Compoundierung auf einem Einwellen- oder Doppelwellen-Extruder mit Entgasungsvorrichtung bei eingestellten Zylindertemperaturen von 220 bis 350 °C erfolgen. Die Schmelze wird in Strangform ausgetragen, im Wasserbad bei 15 bis 80 °C abgekühlt und granuliert. Das Granulat wird für 12 Stunden bei 80 bis 120 °C unter Stickstoff auf einen Wassergehalt von weniger als 0.1 Gew.-% getrocknet. Auf diese Weise lässt sich durch Verwendung erhöhter Additivkonzentrationen auch ein Masterbatch herstellen.

Die Mischung oder das compoundierte Granulat, jeweils mit Feuchten von weniger als 0.1 %, kann beispielsweise über Spritzguss, Spritzprägen, Schliessprägen bzw. Expansionsprägen, oder über Extrusion zu transparenten Formteilen bzw. Folien verarbeitet werden. Die eingestellten Zylindertemperaturen betragen dabei 220 bis 350 °C, die Werkzeugtemperatur liegt bei 20 bis 140 °C. Die Düsentemperatur bei der Extrusion beträgt 160 bis 330 °C, bevorzugt 240 bis 310 °C. Die Temperatur der Kühlwalze bei der Folienextrusion liegt zwischen 20 °C und der Glasübergangstemperatur (Tg) der zu verarbeitenden Polyamidformmasse.

Die **Tabelle 1** zeigt die verwendeten, bei der EMS-CHEMIE AG (Domat/Ems, Schweiz) hergestellten Polyamidmaterialien:

| Polyamid-Material | relative Viskosität | Brechungsindex $n_D^{20}$ | Glasübergangstemperatur | Zusammensetzung Mol.-% |
|---|---|---|---|---|
| MACM12 | 1.73 | 1.51 | 155 | - |
| MACMI/MACMT/12 | 1.53 | 1.54 | 194 | 38/38/24 |
| 6I/6T/MACMI/MACMT/ PACMI/PACMT/12 | 1.72 | 1.59 | 159 | 19.25/19.25/3.75/3.75/1.35/1.35/2.7 |
| 6I/MXDI | 1.48 | 1.61 | 150 | 53.6/46.3 |

Die **Tabelle 2** zeigt die untersuchten, kommerziell erhältlichen UV-Absorber nach Klassen und den jeweils verwendeten Vertreter einer Klasse:

| UV-Absorber | Klasse | Hersteller |
|---|---|---|
| A | Chlorierte 2-(2-Hydroxyphenyl)-2H-benzotriazole | Ciba Spezalitätenchemie Schweiz AG, |
| B | Unchlorierte 2-(2-Hydroxyphenyl)-2H-benzotriazole | Ciba Spezalitätenchemie Schweiz AG, |
| C | (2-Hydroxyphenyl)-s-triazine | Ciba Spezalitätenchemie Schweiz AG, |
| D | Dibenzoylmethane | DSM, Niederlande |
| E | Aminohydroxybenzoylbenzoesäureester | BASF AG, Deutschland |

| UV-Absorber | Verwendeter Vertreter | Handelsnamen | Schmelzpunkt [°C] |
|---|---|---|---|
| A | 2-(5-Chloro-2H-benzotriazol-2-yl)-6-(1,1-dimethylethyl)phenol | Tinuvin 326 | 138 |
| B | 2-(2H-Benzotriazol-2-yl)-4,6-bis(1-methyl-1-phenylethyl)phenol | Tinuvin 234 | 139 |
| C | 2,4-Diphenyl-6-(2-hydroxy-4-hexyloxyphenyl)-s-trianzin | Tinuvin 1577 | 149 |
| D | 1-(4-Metoxyphenyl)-3-(4-tert-butylphenyl)propan-1,3-dion | Parsol 1789 | 82 |
| E | 2-(4'-Diethylamino-2'-hydroxybenzoyl)benzoesäure-n-hexylester | Uvinul A Plus | 54 |

Die **Tabelle 3** zeigt die hergestellten Masterbatches:

| Masterbatch | Zusammensetzung | | | | Hersteller |
|---|---|---|---|---|---|
| | Trägermaterial | Gew.-% | UV-Absorber | Gew.-% | |
| F | PA MACM12 | 92 | A | 8 | EMS-CHEMIE AG, Schweiz |
| G | PA MACM12 | 92 | D | 8 | EMS-CHEMIE AG, Schweiz |
| H | PA MACM12 | 92 | D B | 7 1 | EMS-CHEMIE AG, Schweiz |

Zum Testen der UV-Absorber in Polyamidformmassen wurden Prüfkörper hergestellt. Die Herstellung dieser Prüfkörper in Form von Rundplatten erfolgte auf einer Spritzgussmaschine Typ Krauss-Maffei KM 100-380CX: Dazu wird die Mischung oder das compoundierte Granulat, jeweils mit einer Feuchte von weniger als 0.1 %, in den Einzugstrichter der Spritzgussmaschine gegeben und in einem polierten Stahlwerkzeug mit 2 Kavitäten zu Rundplatten mit der Dimension 75 x 2 mm verarbeitet. Die eingestellten Zylindertemperaturen liegen dabei zwischen 220 und 350 °C und die Werkzeugtemperatur bei 80 °C. Die Einspritzzeit bewegt sich je nach eingespritztem Volumen von 0.5 bis 10 s. Die gesamte Zykluszeit beträgt 20 bis 400 s. Die Rundplatten wurden im trockenen Zustand verwendet, nachdem sie nach dem Spritzguss mindestens 48 h bei Raumtemperatur in trockener Umgebung, d.h. über Silicagel, gelagert wurden.
Die Prüfkörper in der Form der Rundplatten wurden nach folgenden Normen getestet und vermessen:

Relative Viskosität:

ISO 307
0,5 Gew.-%-ige m-Kresollösung
Temperatur 20 °C
Berechnung der relativen Viskosität (RV) nach $RV = t/t_0$ in Anlehnung an Abschnitt 11 der Norm.

Glasumwandlungstemperatur (Tg)

ISO-Norm 11357-1/-2
Granulat
Die Differential Scanning Calorimetry (DSC) wurde mit Aufheizrate von 20 °C/min durchgeführt. Angegeben wird die Temperatur für den Onset.

Lichttransmission und Haze:

ASTM D 1003
Rundplatte, Dicke 2 mm, Radius 37,5 mm
Temperatur 23 °C

Messgerät Haze Gard plus der Firma Byk Gardner mit CIE Lichtart C. Der Lichttransmissions- und der Hazewert werden in % der eingestrahlten Lichtmenge angegeben.
Transmission bei einer definierten Wellenlänge
Rundplatte, Dicke 2 mm, Radius 37,5 mm
Temperatur 23 °C
Die Transmission wird mit dem UV-VIS-Spektrometer Lambda 35 der Firma Perkin-Elmer bei den einzelnen Wellenlängen 380, 385, 400 nm nach der Gleichung

$$ T \;=\; (I / I_o) \times 100 $$

ermittelt, wobei $I_o$ die Intensität des eingestrahlten Lichts und $I$ die Intensität des durchgetretenen Lichts darstellt.
Bei Lambda 35 handelt es sich um ein Zweistrahlgerät mit einer Wellenlängenauflösung von 0.5 nm und einem Wellenlängenbereich von 190 nm bis 1100 nm.

Yellow Index
ASTM D 1925
Rundplatte, Dicke 2 mm, Radius 37,5 mm
Temperatur 23 °C

Brechungsindex (Brechzahl)
DIN 53491
Rundplatte, Dicke 2 mm, Radius 37,5 mm
Temperatur 20 °C
Brechungsindex $n_D^{20}$: Messung bei der Standardwellenlänge - der gelben D-Linie des Natriums - bei 20 °C.

An Hand der eingangs formulierten Aufgabenstellung wurde eine Reihe von Bedingungen zusammengestellt, welche eine erfindungsgemässe Polyamidformmassen-Schmelze erfüllen soll:

- Es soll ein UV-Schutz bereit gestellt werden, der UV-Strahlung unterhalb einer Wellenlänge von 400 nm, 385 nm oder 380 nm absorbiert, so dass die Transmission dieser Formteile bei einer Formteildicke von 2 mm für Licht mit einer Wellenlänge von 400 nm weniger als 20 %, bevorzugt weniger als 10 % und speziell bevorzugt weniger als 5 % und besonders bevorzugt weniger als 1 % beträgt.
- Der Yellow-Index (YI), gemessen nach ASTM D 1925 an 2 mm dicken Platten, soll im Originalzustand niedrig sein und den Wert 5, bevorzugt den Wert 2, nicht übersteigen.
- Es sollen möglichst wenig Ablagerungen bzw. Belagsbildungen bei der Verarbeitung entstehen. Als Test wurde die Belagsbildung in einer Spritzgussform ausgewählt, wobei die Resultate prinzipiell auch auf Kühlwalzen zur Herstellung von Folien übertragen werden können.

Im folgenden werden an Hand der **Tabelle 4** die erhaltenen Resultate an Hand des verwendeten Testpolyamids PA 6I/MXDI gezeigt und anschliessend erläutert:

| | | Vergleichsbeispiele | | | | Beispiele | |
|---|---|---|---|---|---|---|---|
| Komponenten: | Einheit | 1 | 2 | 3 | 4 | 5 | 6 |
| PA 6I/MXDI | Gew.-% | 100.0 | 99.9 | 99.9 | 99.9 | 99.9 | 99.9 |

(fortgesetzt)

| Komponenten: | Einheit | Vergleichsbeispiele | | | | Beispiele | |
|---|---|---|---|---|---|---|---|
| | | 1 | 2 | 3 | 4 | 5 | 6 |
| UV-Absorber A | Gew.-% | - | 0.1 | - | - | - | - |
| UV-Absorber B | Gew.-% | - | - | 0.1 | - | - | - |
| UV-Absorber C | Gew.-% | - | - | - | 0.1 | - | - |
| UV-Absorber D | Gew.-% | - | - | - | - | 0.1 | - |
| UV-Absorber E | Gew.-% | - | - | - | - | - | 0.1 |
| **Tests:** | | | | | | | |
| Haze | % | 0.4 | 0.6 | 0.7 | 0.7 | 0.5 | 0.6 |
| Lichttransmission | % | 92.1 | 91.6 | 91.4 | 91.6 | 91.8 | 91.4 |
| YI ASTM D 1925 | original | 2.3 | 3.1 | 7.2 | 2.9 | 4.9 | 4.9 |
| | Suntest | 26.0 | 7.5 | 10.1 | 8.0 | 13.3 | 11.4 |
| Transmission | 380 nm, % | 63.0 | 0.0 | 0.0 | 6.5 | 0.0 | 0.0 |
| Transmission | 385 nm, % | 67.3 | 0.3 | 0.3 | 18.3 | 0.2 | 0.2 |
| Transmission | 400 nm, % | 74.9 | 9.9 | 10.6 | 57.5 | 3.7 | 7.4 |

Verglichen mit dem unbehandelten Testpolyamid PA 6I/MXDI (Vergleichsbeispiel 1), reduziert die Zugabe von 0.1 Gew.-% eines UV-Absorbers zum Testpolyamid in jedem Fall die Transmission von Licht mit einer Wellenlänge von 380, 385 und 400 nm, die am Prüfkörper gemessen wurde. Dabei ergaben die beiden UV-Absorber D (Beispiel 5) und E (Beispiel 6) die besten Resultate, ohne dass sich die Lichttransmission erheblich verschlechterte. Diese war in jedem Fall höher als 91 %. Ebenfalls eine recht gute Reduktion der Transmission von Licht mit einer Wellenlänge von 380, 385 und 400 nm wurde mit den UV-Absorbern A (Vergleichsbeispiel 2) und B (Vergleichsbeispiel 3) erreicht. Zudem zeigte sich, dass sich der Yellow-Index beim Bestrahlen der Prüfkörper mit Sonnenlicht (Suntest) verschlechterte. Allerdings stieg auch beim unbehandelten Testpolyamid PA 6I/MXDI der Yellow-Index, also die Vergilbung, durch die Bestrahlung mit Sonnenlicht an. Der Haze-Wert war in allen Fällen in Ordnung.

Im folgenden werden an Hand der **Tabelle 5** die erhaltenen Resultate an Hand des verwendeten Testpolyamids PA MACM12 gezeigt und anschliessend erläutert:

| Komponenten: | Einheit | Vergleichsbeispiele | | | | Beispiele | | |
|---|---|---|---|---|---|---|---|---|
| | | 7 | 8 | 9 | 10 | 11 | 12 | 13 |
| PA MACM12 | Gew.-% | 100.0 | 99.8 | 99.8 | 99.8 | 99.8 | 99.8 | 99.8 |
| UV-Absorber A | Gew.-% | - | 0.2 | - | 0.1 | - | - | - |
| UV-Absorber B | Gew.-% | - | - | 0.2 | 0.1 | - | 0.05 | 0.1 |
| UV-Absorber D | Gew.-% | - | - | - | - | 0.2 | 0.15 | 0.1 |
| **Tests:** | | | | | | | | |
| Haze | % | 0.4 | 0.5 | 0.6 | 0.5 | 0.6 | 0.3 | 0.4 |
| Lichttransmission | % | 92.3 | 91.7 | 91.7 | 91.7 | 92.0 | 92.0 | 92.0 |
| YI ASTM D 1925 | original | -2.4 | 5.9 | 5.2 | 5.2 | 0.8 | -0.7 | -0.7 |
| | Suntest | -1.4 | 3.9 | 3.0 | 3.0 | 6.1 | 3.4 | 0.7 |
| Transmission | 380 nm, % | 82.7 | 0.1 | 0.0 | 0.0 | 0.1 | 0.0 | 0.1 |
| Transmission | 385 nm, % | 83.8 | 0.2 | 0.7 | 0.3 | 0.3 | 0.2 | 0.3 |
| Transmission | 400 nm, % | 86.2 | 3.1 | 50.3 | 22.4 | 4.0 | 8.4 | 16.8 |

Verglichen mit dem unbehandelten Testpolyamid PA MACM12 (Vergleichsbeispiel 7), reduziert die Zugabe von insgesamt 0.2 Gew.-% eines oder zweier UV-Absorber zum Testpolyamid in jedem Fall die Transmission von Licht mit einer Wellenlänge von 380, 385 und 400 nm, die am Prüfkörper gemessen wurde. Dabei ergab der UV-Absorber D (Beispiel 11) ein gutes Resultat, ohne dass sich die Lichttransmission erheblich verschlechterte. Diese war in jedem Fall höher als 91 %. Ebenfalls eine recht gute Reduktion der Transmission von Licht mit einer Wellenlänge von 380, 385 und 400 nm wurde mit dem UV-Absorber A (Vergleichsbeispiel 8) erreicht. Zudem zeigte sich, dass sich der Yellow-Index beim Bestrahlen der Prüfkörper mit Sonnenlicht (Suntest) verschlechterte. Allerdings stieg auch beim unbehandelten Testpolyamid PA MACM12 der Yellow-Index, also die Vergilbung, durch die Bestrahlung mit Sonnenlicht leicht an. Es fällt auf, dass sich bei einer Kombination der UV-Absorber B und D (Beispiele 12 und 13) gegenüber der Verwendung von einem UV-Absorber D (Beispiel 11) der Haze-Wert und das Suntest-Resultat verbesserte. Allerdings musste eine leicht höhere (schlechtere) Transmission von Licht mit einer Wellenlänge von 400 nm festgestellt werden. Der UV-Absorber B führt bei diesem Testpolyamid PA MACM12 zu einem wesentlich schlechteren Resultat als zum vorher geprüften Testpolyamid PA 6I/MXDI.

Im folgenden werden an Hand der **Tabelle 6** die erhaltenen Resultate an Hand des verwendeten Testpolyamids PA MACMI/MACMT/12 gezeigt und anschliessend erläutert:

| Komponenten: | Einheit | Vergleichsbeispiele | | Beispiele | | |
| | | 14 | 15 | 16 | 17 | 18 |
| PA MACMI/MACMT/12 | Gew.-% | 100.0 | 99.8 | 99.8 | 99.8 | 99.8 |
| UV-Absorber A | Gew.-% | - | 0.2 | - | - | - |
| UV-Absorber D | Gew.-% | - | - | 0.2 | - | 0.1 |
| UV-Absorber E | Gew.-% | - | - | - | 0.2 | 0.1 |
| **Tests:** | | | | | | |
| Haze | % | 0.4 | 0.5 | 0.4 | 0.5 | 0.4 |
| Lichttransmission | % | 93.5 | 93.1 | 92.9 | 93.0 | 93.0 |
| YI ASTM D 1925 | original | 0.0 | 6.1 | 4.9 | 5.0 | 4.9 |
| | Suntest | 2.0 | 4.3 | 3.0 | 3.2 | 3.1 |
| Transmission | 380 nm, % | 66.9 | 0.0 | 0.0 | 0.0 | 0.0 |
| Transmission | 385 nm, % | 69.3 | 0.3 | 0.2 | 0.2 | 0.2 |
| Transmission | 400 nm, % | 76.2 | 6.4 | 2.6 | 4.7 | 3.0 |

Verglichen mit dem unbehandelten Testpolyamid PA MACMI/MACMT/12 (Vergleichsbeispiel 14), reduziert die Zugabe von 0.2 Gew.-% eines UV-Absorbers zum Testpolyamid in jedem Fall die Transmission von Licht mit einer Wellenlänge von 380, 385 und 400 nm, die am Prüfkörper gemessen wurde. Dabei ergaben die UV-Absorber D (Beispiel 16) und E (Beispiel 17) ein gutes Resultat, ohne dass sich die Lichttransmission erheblich verschlechterte. Ein ebenfalls gutes Resultat ergab sich aus der Zugabe einer Mischung der beiden UV-Absorber D und E (Beispiel 18) zur Polyamidformmassen-Schmelze. Die gemessene Lichttransmission war in jedem Fall höher als 92 %. Ebenfalls eine recht gute Reduktion der Transmission von Licht mit einer Wellenlänge von 380, 385 und 400 nm wurde mit dem UV-Absorber A (Vergleichsbeispiel 15) erreicht. Zudem zeigte sich, dass sich der Yellow-Index beim Bestrahlen der Prüfkörper mit Sonnenlicht (Suntest) nur beim unbehandelten Testpolyamid PA MACMI/MACMT/12 verschlechterte; das Hinzufügen eines UV-Absorber A (Vergleichsbeispiel 15), D (Beispiel 16), E (Beispiel 17) oder einer Mischung der UV-Absorber D und E (Beispiel 18) ergab nach der Bestrahlung mit Sonnenlicht sogar eine geringere Vergilbung. Der Haze-Wert war in allen Fällen in Ordnung.

Im folgenden werden an Hand der **Tabelle 7** die erhaltenen Resultate an Hand des verwendeten Testpolyamids PA 6I/6T/MACMI/MACMT/PACMI/PACMT/12 gezeigt und anschliessend erläutert:

| Komponenten: | Einheit | Vergleichsbeispiele | | Beispiele | | |
| | | 19 | 20 | 21 | 22 | 23 |
| PA 6I/6T/MACMI/ MACMT/ PACMI/PACMT/12 | Gew.-% | 100.0 | 99.8 | 99.8 | 99.8 | 99.8 |

(fortgesetzt)

| Komponenten: | Einheit | Vergleichsbeispiele | | Beispiele | | |
|---|---|---|---|---|---|---|
| | | 19 | 20 | 21 | 22 | 23 |
| UV-Absorber A | Gew.-% | - | 0.2 | - | - | - |
| UV-Absorber D | Gew.-% | - | - | 0.2 | - | 0.1 |
| UV-Absorber E | Gew.-% | - | - | - | 0.2 | 0.1 |
| Tests: | | | | | | |
| Haze | % | 0.4 | 0.4 | 0.4 | 0.4 | 0.4 |
| Lichttransmission | % | 92.5 | 92.0 | 92.0 | 92.1 | 92.0 |
| YI ASTM D 1925 | original | 0.0 | 7.2 | 5.1 | 5.6 | 5.3 |
| | Suntest | 5.0 | 9.7 | 7.8 | 8.9 | 8.4 |
| Transmission | 380 nm, % | 67.8 | 0.0 | 0.0 | 0.0 | 0.0 |
| Transmission | 385 nm, % | 70.9 | 0.3 | 0.2 | 0.2 | 0.2 |
| Transmission | 400 nm, % | 77.7 | 6.3 | 2.8 | 4.8 | 3.4 |

Verglichen mit dem unbehandelten Testpolyamid PA 6I/6T/MACMI/MACMT/ PACMI/PACMT/12 (Vergleichsbeispiel 19), reduziert die Zugabe von 0.2 Gew.-% eines UV-Absorbers zum Testpolyamid in jedem Fall die Transmission von Licht mit einer Wellenlänge von 380, 385 und 400 nm, die am Prüfkörper gemessen wurde. Dabei ergaben die UV-Absorber D (Beispiel 21) und E (Beispiel 22) ein gutes Resultat, ohne dass sich die Lichttransmission erheblich verschlechterte. Diese war in jedem Fall höher als 92 %. Ebenfalls eine recht gute Reduktion der Transmission von Licht mit einer Wellenlänge von 380, 385 und 400 nm wurde mit einer Mischung der beiden UV-Absorber D und E (Beispiel 23) und auch mit dem UV-Absorber A (Vergleichsbeispiel 20) erreicht. Zudem zeigte sich, dass sich der Yellow-Index beim Bestrahlen der Prüfkörper mit Sonnenlicht (Suntest) verschlechterte. Allerdings stieg auch beim unbehandelten Testpolyamid 6I/6T/MACMI/MACMT/PACMI/PACMT/12 der Yellow-Index, also die Vergilbung, durch die Bestrahlung mit Sonnenlicht leicht an. Der Haze-Wert war in allen Fällen in Ordnung.

Aus den bisher gezeigten Testes kann abgeleitet werden, dass eine Verwendung der UV-Absorber A, D oder E bei allen vier Testpolyamiden zu akzeptablen Messwerten führt. Nun soll das Verursachen von Ablagerungen an den Oberflächen der Kavität einer Spritzgussform Auskunft darüber geben, welche Polyamid-UV-Absorber-Kombinationen sich beispielsweise für die Serienherstellung von spritzgegossenen Polyamidlinsen eigenen. Als Mass wurde die Anzahl der Spritzgusszyklen genommen, bis sichtbare Ablagerungen auf diesen Oberflächen festgestellt werden konnten.

Aus ökonomischen Gründen wurden diese Tests nach 250 Spritzgusszyklen abgebrochen, falls bis dahin noch kein Belag sichtbar und somit die Qualität der Formteile einwandfrei war.

Im folgenden werden an Hand der **Tabelle 8** die erhaltenen Resultate an Hand der verwendeten Testpolyamide PA MACM12 und PA MACMI/12 gezeigt und anschliessend erläutert:

| Komponenten: | Einheit | Vergleichsbeispiele | | | | Beispiele | | |
|---|---|---|---|---|---|---|---|---|
| | | 24 | 25 | 26 | 27 | 28 | 29 | 30 |
| PA MACM12 | Gew.-% | 99.6 | 99.6 | 99.6 | - | 99.6 | 99.6 | 99.6 |
| PA MACMI/12 | Gew.-% | - | - | - | 99.6 | - | - | - |
| UV-Absorber A | Gew.-% | 0.4 | 0.2 | | 0.4 | - | - | - |
| UV-Absorber B | Gew.-% | - | 0.2 | 0.4 | - | - | - | - |
| UV-Absorber D | Gew.-% | - | - | - | - | 0.4 | - | 0.2 |
| UV-Absorber E | Gew.-% | - | - | - | - | - | 0.4 | 0.2 |
| Tests: | | | | | | | | |
| Anzahl Spritzguss-Zyklen bis Ablagerungen sichtbar sind | | 60 | 90 | > 250 | 58 | > 250 | > 250 | > 250 |

(fortgesetzt)

| Tests: | | | | | | | | |
|---|---|---|---|---|---|---|---|---|
| Haze | % | 0.9 | 0.7 | 0.6 | 0.6 | 0.7 | 0.7 | 0.7 |
| Lichttransmission | % | 91.4 | 91.5 | 91.6 | 91.9 | 91.8 | 91.9 | 91.9 |
| YI ASTM D 1925 | original | 12.0 | 7.1 | 6.0 | 11.3 | 1.7 | 1.9 | 1.7 |
| | Suntest | - | - | - | - | - | - | - |
| Transmission | 380 nm, % | 0.0 | 0.0 | 0.0 | 0.0 | 0.0 | 0.0 | 0.0 |
| Transmission | 385 nm, % | - | - | - | - | 0.0 | 0.0 | 0.0 |
| Transmission | 400 nm, % | 0.6 | 3.2 | 28.0 | 0.6 | 0.3 | 0.9 | 0.6 |

Die bisher aussichtsreichsten UV-Absorber zum Einarbeiten in eine Polyamidformmassen-Schmelze A, D und E, sowie die Mischung aus den UV-Absorbern D und E zeigten eine sehr unterschiedliche Neigung zur Bildung von Ablagerungen auf der Oberfläche des Werkzeugs:

Der bisherige Mitfavorit, UV-Absorber A verursachte zusammen mit den Testpolyamiden PA MACM12 (Vergleichsbeispiel 24) bzw. PA MACMI/12 (Vergleichsbeispiel 27) schon nach 60 bzw. 58 Spritzgusszyklen sichtbare Ablagerungen und fällt damit aus der Evaluation.

Der UV-Absorber B verursacht auch nach 250 Zyklen keine sichtbaren Ablagerungen; er kann den gestellten Anforderungen jedoch nicht genügen, weil er beim Testpolyamid PA MACM12 eine wesentlich höhere (schlechtere) Transmission von Licht mit einer Wellenlänge von 400 nm zulässt (vgl. Tabelle 5).

Der UV-Absorber C wurde nicht zum Zyklus-Test zugelassen, weil er beim Testpolyamid PA 6I/MXDI eine wesentlich höhere (schlechtere) Transmission von Licht bei allen gemessenen Wellenlängen 380, 385 und 400 nm zulässt (vgl. Tabelle 4).

Der UV-Absorber D überzeugt bei den physikalischen Messwerten, wenn er in eine Polyamidformmassen-Schmelze eingearbeitet wurde. Dies gilt für alle verwendeten Testpolyamide PA 6I/MXDI (vgl. Tabelle 4: Beispiel 5), PA MACM12 (vgl. Tabelle 5: Beispiel 11), PA MACMI/MACMT/12 (vgl. Tabelle 6: Beispiel 16) und PA 6I/6T/MACMI/MACMT/PACMI/PACMT/12 (vgl. Tabelle 7: Beispiel 21). Dieser UV-Absorber D verursacht in Kombination mit dem Testpolyamid PA MACM12 (vgl. Tabelle 8: Beispiel 28) auch nach 250 Zyklen keine sichtbaren Ablagerungen. Der UV-Absorber D erfüllt somit alle an ihn gestellten Anforderungen und ist ein erfindungsgemässer UV-Absorber in einer Polyamidformmassen-Schmelze.

Der UV-Absorber E überzeugt bei den physikalischen Messwerten, wenn er in eine Polyamidformmassen-Schmelze eingearbeitet wurde. Dies gilt für alle Testpolyamide PA 6I/MXDI (vgl. Tabelle 4: Beispiel 6), PA MACMI/MACMT/12 (vgl. Tabelle 6: Beispiel 17) und PA 6I/6T/MACMI/MACMT/PACMI/PACMT/12 (vgl. Tabelle 7: Beispiel 22) in denen er geprüft wurde. Der UV-Absorber E verursacht in Kombination mit dem Testpolyamid PA MACM12 (vgl. Tabelle 8: Beispiel 29) auch nach 250 Zyklen keine sichtbaren Ablagerungen. Der UV-Absorber E erfüllt somit alle an ihn gestellten Anforderungen und ist ein erfindungsgemässer UV-Absorber in einer Polyamidformmassen-Schmelze.

Die Kombination der UV-Absorber D und E überzeugt bei den physikalischen Messwerten, wenn sie in eine Polyamidformmassen-Schmelze eingearbeitet wurde (vgl. Beispiele 23 und 30) und zeigt mit dem Testpolyamid PA MACM12 (vgl. Tabelle 8: Beispiel 30) auch nach 250 Zyklen keine sichtbaren Ablagerungen. Die Kombination der UV-Absorber D und E erfüllt somit alle an sie gestellten Anforderungen und ist eine erfindungsgemäss bevorzugte UV-Absorber-Kombination in einer Polyamidformmassen-Schmelze.

Das Kriterium der unterschiedlichen Neigung zur Bildung von Ablagerungen auf der Oberfläche des Werkzeugs ist stichhaltig, weil eine solche Belagsbildung die Qualität der Oberflächen der mit diesen UV-Absorbern hergestellten Spritzgussteile erheblich beeinträchtigt. Die gleichen Polyamidformmassen-Schmelzen ohne diese UV-Absorber verursachten keine solche unerwünschte Belagsbildung, so dass diese eindeutig den verwendeten UV-Absorbern zugeordnet werden muss.

Wie die in Tabelle 8 angegebenen Transmissionswerte zeigen, ist es durch die Verwendung von 0.4 Gew.-% UV-Absorber A, D, E bzw. der Kombination D und E durchaus möglich die Transmission auf unter 1 % zu senken. Bei Verwendung des UV-Absorbers A in dieser Menge steigt aber der Yellow-Index drastisch an, so dass ein Wert von 12 resultiert (vgl. Vergleichsbeispiel 24).

Bei Verwendung der erfindungsgemässen UV-Absorber D, E oder deren Mischung ist die Zunahme des Yellow-Indexes bei weitem geringer, so dass Werte unter 2 resultieren (vgl. Beispiele 28, 29 und 30).

Eine zweite Testserie, bei welcher Masterbatches verwendet wurden, bestätigte die eben diskutierten Ergebnisse des Zyklus-Tests. Im folgenden werden an Hand der **Tabelle 9** die erhaltenen Resultate an Hand des verwendeten Testpolyamids PA MACM12 gezeigt und anschliessend erläutert:

|  |  | Vergleichsbeispiel | Beispiele | |
|---|---|---|---|---|
| Komponenten: | Einheit | 31 | 32 | 33 |
| PA MACM12 | Gew.-% | 95 | 95 | 95 |
| UV-Masterbatch F | Gew.-% | 5 | - | - |
| UV-Masterbatch G | Gew.-% | - | 5 | - |
| UV-Masterbatch H | Gew.-% | - | - | 5 |
| Tests: |  |  |  |  |
| Anzahl Spritzguss-Zyklen bis Ablagerungen sichtbar sind | | 58 | >250 | > 250 |

Von dem UV-Masterbatch F (Vergleichsbeispiel 31) mit 8 % des UV-Absorbers A (vgl. Tabelle 3) wurden 5 Gew.-% zu dem Testpolyamid PA MACM12 zugegeben. Somit beträgt der Anteil des UV-Absorbers A in Bezug auf das Testpolyamid 0.4 Gew.-%. Ähnlich, wie schon in Tabelle 8 gezeigt (siehe Vergleichsbeispiel 24) verursacht der UV-Absorber A zusammen mit dem Testpolyamid PA MACM12 diesmal bereits nach 58 Spritzgusszyklen sichtbare Ablagerungen.

Von dem UV-Masterbatch G (Beispiel 32) mit 8 % des UV-Absorbers D (vgl. Tabelle 3) wurden 5 Gew.-% zu dem Testpolyamid PA MACM12 zugegeben. Somit beträgt der Anteil des UV-Absorbers D in Bezug auf das Testpolyamid 0.4 Gew.-%. Gerade so wie schon in Tabelle 8 gezeigt (vgl. Beispiel 28) verursacht der UV-Absorber D in Kombination mit dem Testpolyamid PA MACM12 (vgl. Tabelle 9; Beispiel 32) auch nach 250 Zyklen keine sichtbaren Ablagerungen.

Von dem UV-Masterbatch H (Beispiel 33) mit 7 % des UV-Absorbers D und 1 % des UV-Absorbers B (vgl. Tabelle 3) wurden 5 Gew.-% zu dem Testpolyamid PA MACM12 zugegeben. Somit beträgt der Anteil des UV-Absorber-Gemisches D/B in Bezug auf das Testpolyamid 0.4 Gew.-%. Die Anwesenheit beider UV-Absorber B und D verursacht somit in Kombination mit dem Testpolyamid PA MACM12 auch nach 250 Zyklen keine sichtbaren Ablagerungen. Dieses Ergebnis ist auch deshalb von Interesse, weil eine ähnliche Kombination von 0.05 Gew.-% des UV-Absorbers B und 0.15 Gew.-% des UV-Absorbers D (vgl. Tabelle 5, Beispiel 12) einen verbesserten Haze-Wert und Yellow-Index ergab; dabei musste nur ein leicht schlechterer Transmissionswert von Licht mit einer Wellenlänge von 400 nm gegenüber der Verwendung von nur UV-Absorber D in Kauf genommen werden.

Auf Grund der vorliegenden Testergebnisse werden erfindungsgemäss die beiden UV-Absorber D oder E zu einer Polyamidformmassen-Schmelze gegeben, mit welcher transparente, für Licht bis zu einer Wellenlänge von 400 nm eine reduzierte Transmission aufweisende Kunststoff-Produkte hergestellt werden sollen. Der Anteil eines dieser zugegebenen UV-Absorber beträgt vorzugsweise zwischen 0.01 und 1.0 Gew.-%, besonders bevorzugt zwischen 0.05 und 0.4 Gew.-%, bezogen auf das Gewicht der Polyamidformmasse.

Beide UV-Absorber ermöglichen, dass die diesen UV-Absorber umfassende Polyamidformmassen-Schmelze auf Oberflächen, mit denen sie in Kontakt kommt, keine sichtbare Belagsbildung verursacht:

Der UV-Absorber D, 1-(4-Metoxyphenyl)-3-(4-tert-butylphenyl)propan-1,3-dion, ist ein Vertreter der Dibenzoylmethane.

Der UV-Absorber E, 2-(4'-Diethylamino-2'-hydroxybenzoyl)benzoesäure-n-hexylester, ist ein Vertreter der Aminohydroxybenzoylbenzoesäureester.

Die beiden erfindungsgemässen UV-Absorber D und E weisen als gemeinsames chemisches Merkmal mindestens eine substituierte Benzoylgruppe auf.

Es ist bekannt, dass Avobenzone (auch bekannt unter der Bezeichnung Dibenzoylmethane oder Handelsnamen wie z.B. Parsol 1789; UV-Absorber D) unter der Belastung durch Sonnenlicht degradieren kann (siehe z.B. Warwick L. Morison, M.D. "Photosensitivity" The New England Journal of Medicine. Boston: Mar 11, 2004. Vol. 350, Iss. 11; pg. 1111 - 1117). Offenbar kann diese Degradation durch Zumischen des UV-Absorbers B vermindert werden (vgl. Tabelle 5, Beispiele 12 und 13).

Ein weiterer Hinweis auf eine mögliche Stabilisation des UV-Absorbers D ergibt sich aus dem nächsten Beispiel. Im folgenden werden an Hand der **Tabelle 10** die erhaltenen Resultate an Hand des verwendeten Testpolyamids PA MACM12 gezeigt und anschliessend erläutert:

| | | Beispiele | |
|---|---|---|---|
| Komponenten: | Einheit | 34 | 35 |
| PA MACM12 | Gew.-% | 99.85 | 99.85 |
| UV-Absorber D | Gew.-% | 0.15 | 0.15 |
| Makrolex blau RR | ppm | - | 1.4 |
| Tests: | | | |
| Haze | % | 0.5 | 0.3 |
| Lichttransmission | % | 92.0 | 90.8 |
| YI ASTM D 1925 | original | 0.8 | -3.7 |
| | Suntest | 6.1 | 4.4 |
| Transmission | 380 nm, % | 0.1 | 0.0 |
| Transmission | 385 nm, % | 0.3 | 0.24 |
| Transmission | 400 nm, % | 4.9 | 4.4 |

Eine Reduktion des UV-Absorber-Anteils von 0.2 Gew.-% (siehe Tabelle 5: Beispiel 11) auf 0.15 Gew.-% (Beispiel 34) zum Testpolyamid PA MACM12 ergibt einen leicht tieferen Haze-Wert und einen etwas erhöhten Transmissionswert bei 400 nm. Alle anderen Messwerte sind identisch. Gibt man aber nur 1.4 ppm des Farbstoffes Macrolex blau RR (LANXESS Deutschland GmbH, Leverkusen) dazu, so wird der Haze-Wert nochmals reduziert. Allerdings reduziert sich die Lichttransmission auch etwas, bleibt aber noch über 90 %. Deutlich reduziert sind insbesondere der Yellow-Index und der Transmissionswert für Licht mit einer Wellenlänge von 400 nm.

Überraschenderweise stellte sich somit heraus, dass Polyamidformmassen-Schmelzen mit einem UV-Absorber in der Form einer Dibenzoylmethan-Verbindung D oder eines Aminohydroxybenzoylbenzoesäureesters E auf Oberflächen, mit denen diese Polyamidformmassen-Schmelzen in Kontakt kamen, keine sichtbare Belagsbildung verursachen.

Überraschend wurden somit UV-Absorber gefunden, welche die gewünschten Eigenschaften in transparenten Polyamiden ermöglichen und welche sowohl die hohen Temperaturen bei der Verarbeitung oder Compoundierung der Formmasse als auch die sauren und alkalischen Endgruppen der Polyamide überstehen. Entgegen den Erwartungen, hervorgerufen durch den niedrigen Schmelzpunkt, neigen UV-Absorber des Typs Dibenzoylmethan bei der Einarbeitung in Polyamide oder bei der Verarbeitung dibenzoylmethanhaltiger Polyamidformmassen nicht zur Bildung sichtbarer Ablagerungen auf Plastifizierschnecken, Düsenlippen, Werkzeugoberflächen oder Kühlwalzen. Dieser Vorteil bleibt auch bei Kombination der Dibenzoylmethane mit unchlorierten Hydroxyphenylbenztriazolen erhalten.

Mit einer Beimischung von unchlorierten Hydroxyphenylbenztriazolen zu Dibenzoylmethanen kann überraschenderweise auch die Zunahme des Yellow-Index nach Belichtung verringert werden, wie die Beispiele 12 und 13 zeigen.

Aus diesen Gründen wird des weiteren eine Ausführungsform der erfindungsgemässen Polyamidformmassen-Schmelze bevorzugt, die dadurch gekennzeichnet ist, dass sie einen weiteren UV-Absorber umfasst, welcher dem zumindest einen UV-Absorber D oder E zugemischt ist. Dabei ist der weitere UV-Absorber ausgewählt aus einer Gruppe, die gebildet ist aus unchlorierten Hydroxyphenylbenztriazolen, Aminohydroxybenzoylbenzoesäureester und Dibenzoylmethanen. Speziell bevorzugt ist ein unchloriertes Hydroxyphenylbenztriazol in der Form von 2-(2H-Benzotriazol-2-yl)-4,6-bis(1-methyl-1-phenylethyl)phenol. Ebenfalls speziell bevorzugt ist ein Aminohydroxybenzoylbenzoesäureester in der Form von 2-(4'-Diethylamino-2'-hydroxybenzoyl) benzoesäure-n-hexylester.

Eine andere Methode, diese Zunahme des Yellow-Index zu reduzieren, ist die Kombination der Dibenzoylmethane, bzw. das Mischen einer Verbindung, die mindestens eine substituierte Benzoylgruppe aufweist, mit Farbstoffen der Klasse der Anthrachinon-Farbstoffe, wie beispielsweise Macrolex blau RR oder Macrolex rot 5B, wie Beispiel 35 zeigt. Die Anthrachinon-Farbstoffe werden dabei in Mengen von 0.1 bis 1000 ppm, bevorzugt 0.5 bis 500 ppm eingesetzt. Eine Reduktion des Yellow-Index erzielen auch optische Aufheller wie Tinopal AMS GX oder Tinopal DMS.

Bevorzugt sind transparente Polyamide, die gebildet sind aus :

- mindestens einem Diamin, ausgewählt aus einer Gruppe, die aus Ethylendiamin, Butandiamin, Hexamethylendiamin, Trimethylhexamethylendiamin, Methylpentandiamin, Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Bis(aminomethyl)cyclohexan und seinen Alkylderivaten besteht, und

- mindestens einer Dicarbonsäure, ausgewählt aus der Gruppe, die aus Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, Dimerfettsäure mit 36 oder 44 C-Atomen, Isophthalsäure, Terephthalsäure, Naphthalindicarbonsäure besteht.

Bevorzugt sind alternativ auch transparente Polyamide, die gebildet sind aus den vorgenannten Diaminen und Dicarbonsäuren sowie Lactamen mit 4 bis 15 C-Atomen und/oder $\alpha,\omega$-Aminosäuren mit 4 bis 15 C-Atomen.

Speziell bevorzugte Diamine sind Hexamethylendiamin, Trimethylhexamethylendiamin, 2-Methyl-1,5-pentandiamin, Bis(4-amino-3-methyl-cyclohexyl)methan (abgekürzt MACM), Bis(4-amino-cyclohexyl)methan (abgekürzt PACM), Isophorondiamin, Norbornandiamin, m-Xylylendiamin und 1,3-Bis(aminomethyl)cyclohexan.

Speziell bevorzugte Dicarbonsäuren sind Adipinsäure, Azelainsäure, Sebazinsäure, 1,12-Dodecandisäure, Brassylsäure, 1,14-Tetradecandisäure, 1,15-Pentadecansäure, 1,16-Hexadecandisäure, 1,18-Octadecandisäure, 1,3-Cyclohexandicarbonsäure, 1,4-Cyclohexandicarbonsäure, Dimerfettsäure mit 36 oder 44 C-Atomen, Isophthalsäure, Terephthalsäure und 2,6-Naphthalindicarbonsäure.

Speziell bevorzugte Lactame sind Lactame bzw. $\alpha, \omega$-Aminosäuren mit 4, 6, 7, 8, 11 oder 12 C-Atomen. Dies sind die Lactame Pyrrolidin-2-on (4 C-Atome), $\epsilon$-Caprolactam (6 C-Atome), Önanthlactam (7 C-Atome), Capryllactam (8 C-Atome), Laurinlactam (12 C-Atome) bzw. die $\alpha, \omega$-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

Ganz speziell bevorzugte transparente Polyamide mit hohen Brechungsindices sind PA 6I, PA 6I/6T, PA 6I/6T/6NDC, PA MXDI/6I, PA MXDI/MXDT/6I/6T, PA MXDI/12I, PA MXDI, mit mittleren und niederen Brechungsindices sind PA MACM12, PA MACM13, PA MACM14, PA MACM15, PA MACM16, PA MACM17, PA MACM18, PA 6-3-T, PA MACMI/12, PA MACM6/12, PA MACMT/12, PA MACMI/MACMNDC, PA MACMT/MACMNDC, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, PA 6I/6T/MACMI/MACMT/MACM12/612, PA 6I/6T/6NDC/MACMI/MACMT/MACMNDC, wobei das MACM ganz oder teilweise durch PACM und/oder das $\omega$-Laurolactam ganz oder teilweise durch $\epsilon$-Caprolactam und/oder $\alpha, \omega$-Aminoundecansäure ersetzt sein kann.

Transparente Polyamide können einen oder mehrere Zusatzstoffe ausgewählt aus der Gruppe aus Kondensationskatalysatoren, Kettenreglern, Entschäumern, Stabilisatoren, Gleitmitteln, Farbstoffen, Flammschutzmitteln, photochromen Additiven, Antistatika, Entformungsmitteln, optischen Aufhellern, natürlichen Schichtsilikaten, synthetischen Schichtsilikaten enthalten.

**Patentansprüche**

1. Verfahren zur Herstellung von transparenten Polyamid-Formteilen mit einer Lichttransmission gemessen nach ASTM 1003 bei 2 mm Formteildicke von mindestens 75 % und einer Transmission für Licht mit einer Wellenlänge von 400 nm bei 2 mm Formteildicke von weniger als 20 %, **dadurch gekennzeichnet, dass** in eine thermoplastisch verarbeitbare Polyamidformmassen-Schmelze zumindest ein UV-Absorber eingearbeitet wird, der ausgewählt ist aus einer Gruppe bestehend aus 1-(4-Metoxyphenyl)-3-(4-tert-butylphenyl)propan-1,3-dion und 2-(4'-Diethylamino-2'-hydroxybenzoyl) benzoesäure-n-hexylester, wodurch diese mindestens einen der genannten UV-Absorber umfassende Polyamidformmassen-Schmelze auf Oberflächen, mit denen sie während der Herstellung oder Verarbeitung von transparenten Polyamid-Formteilen in Kontakt kommt, keine sichtbare Belagsbildung verursacht.

2. Verfahren nach Anspruch 1, **dadurch gekennzeichnet, dass** der zumindest eine UV-Absorber ein Gemisch aus 1-(4-Metoxyphenyl)-3-(4-tert-butylphenyl)propan-1,3-dion und 2-(4'-Diethylamino-2'-hydroxybenzoyl) benzoesäure-n-hexylester ist.

3. Verfahren nach einem der vorhergehenden Ansprüche, **dadurch gekennzeichnet, dass** dem zumindest einen UV-Absorber mindestens ein weiterer UV-Absorber beigemischt ist, der ausgewählt ist aus einer Gruppe, die gebildet ist aus unchlorierten Hydroxyphenylbenztriazolen, Aminohydroxybenzoylbenzoesäureestern und Dibenzoylmethanen.

4. Verfahren nach einem der vorhergehenden Ansprüche, **dadurch gekennzeichnet, dass** eine als Werkzeuginnenwand ausgebildete Oberfläche auch nach mehr als 250 Verarbeitungszyklen mit der den zumindest einen UV-Absorber umfassenden Polyamidformmassen-Schmelze frei von einer sichtbaren Belagsbildung ist.

5. Verfahren nach einem der Ansprüche 1 bis 3, **dadurch gekennzeichnet, dass** die Oberfläche, mit der die Polyamidformmassen-Schmelze in Kontakt kommt, die Oberfläche einer Plastifizierschnecke, eines Werkzeugs und einer Kühlwalze ist.

6. Verfahren nach einem der vorhergehenden Ansprüche, **dadurch gekennzeichnet, dass** die transparenten Polyamid-Formteile ausgewählt sind aus einer Gruppe, die Sonnenlinsen, korrigierende Linsen, nicht-korrigierende Linsen, Linsen für Brillen, Brillenteile, Schutzbrillen, Sicht- und Schutzscheiben, Visiere, Displays, Uhrengläser, Gerätegehäuse, Lampenabdeckungen, Linsen für optische Geräte und Systeme, Filter und Folien umfasst.

7. Thermoplastisch verarbeitbare Polyamidformmassen-Schmelze mit zumindest einem UV-Absorber ausgewählt aus einer Gruppe bestehend aus 1-(4-Metoxyphenyl)-3-(4-tert-butylphenyl)propan-1,3-dion und 2-(4'-Diethylamino-2'-hydroxybenzoyl)benzoesäure-n-hexylester, **dadurch gekennzeichnet, dass** die Polyamidformmassen-Schmelze aus einem transparenten Polyamid, aus einer Mischung von transparenten Polyamiden, oder aus einem Blend von transparenten Polyamiden mit mindestens einem teilkristallinen Polyamid gebildet ist, wobei das transparente Polyamid gebildet ist aus:

(a) mindestens einem Diamin, ausgewählt aus einer Gruppe, die aus Ethylendiamin, Butandiamin, Hexamethylendiamin, Trimethylhexamethylendiamin, Methylpentandiamin, Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Bis(aminomethyl)cyclohexan und seinen Alkylderivaten besteht; und

(b) mindestens einer Dicarbonsäure, ausgewählt aus der Gruppe, die aus Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, Dimerfettsäure mit 36 oder 44 C-Atomen, Isophthalsäure, Terephthalsäure, Naphthalindicarbonsäure besteht; und optional aus

(c) Lactamen mit 4 bis 15 C-Atomen und/oder $\alpha,\omega$-Aminosäuren mit 4 bis 15 C-Atomen.

8. Polyamidformmassen-Schmelze nach Anspruch 7, **dadurch gekennzeichnet, dass** das mindestens eine teilkristalline Polyamid ausgewählt ist aus einer Gruppe, die gebildet ist aus PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 66/6, PA 6/66/12, PA 6/12, PA 11, PA 12, PA 912, PA 1212, 6T/6I, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, Polyetheramiden, Polyetheresteramiden und Polyesteramiden oder deren Mischungen oder Copolymeren.

9. Polyamidformmassen-Schmelze nach einem der Ansprüche 7 oder 8, **dadurch gekennzeichnet, dass** das Diamin ausgewählt ist aus einer Gruppe, die Hexamethylendiamin, Trimethylhexamethylendiamin, 2-Methyl-1,5-pentandiamin, Bis(4-amino-3-methyl-cyclohexyl)methan, Bis(4-amino-cyclohexyl)methan, Isophorondiamin, Norbornandiamin, m-Xylylendiamin und 1,3-Bis(aminomethyl)cyclohexan umfasst.

10. Polyamidformmassen-Schmelze nach einem der Ansprüche 7 bis 9, **dadurch gekennzeichnet, dass** die Dicarbonsäure ausgewählt ist aus einer Gruppe, die Adipinsäure, Azelainsäure, Sebazinsäure, 1,12-Dodecandisäure, Brassylsäure, 1,14-Tetradecandisäure, 1,15-Pentadecandisäure, 1,16-Hexadecandisäure, 1,18-Octadecandisäure, 1,3-Cyclohexandicarbonsäure, 1,4-Cyclohexandicarbonsäure, Dimerfettsäure mit 36 oder 44 C-Atomen, Isophthalsäure, Terephthalsäure und 2,6-Naphthalindicarbonsäure umfasst.

11. Polyamidformmassen-Schmelze nach einem der Ansprüche 7 bis 10, **dadurch gekennzeichnet, dass** die Lactame bzw. $\alpha,\omega$-Aminosäuren 4, 6, 7, 8, 11 oder 12 C-Atome aufweisen.

12. Polyamidformmassen-Schmelze nach einem der Ansprüche 7 bis 11, **dadurch gekennzeichnet, dass** die transparenten Polyamide ausgewählt sind aus der Gruppe PA 6I/6T/6NDC/MACMI/MACMT/MACMNDC, PA 6I/6T/6NDC, PA MXDI/6I, PA MXDI/MXDT/6I/6T, PA 6I, PA 6I/6T, PA MXDI/12I, PA MXDI, PA MACM9, PA MACM10, PA MACM11, PA MACM12, PA MACM13, PA MACM14, PA MACM15, PA MACM16, PA MACM17, PA MACM18, PA 6-3-T, PA MACMI/12, PA MACM6/12, PA MACMT/12, PA MACMI/MACMNDC, PA MACMT/MACMNDC, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, und PA 6I/6T/MACMI/MACMT/MACM12/612, wobei gegebenenfalls das MACM ganz oder teilweise durch PACM und/oder das $\alpha,\omega$-Laurolactam ganz oder teil-

weise durch ε-Caprolactam und/oder α,ω-Aminoundecansäure ersetzt ist.

13. Polyamidformmassen-Schmelze nach einem der Ansprüche 7 bis 12, **dadurch gekennzeichnet, dass** mit dem zumindest einen UV-Absorber ausgewählt aus der Gruppe bestehend aus 1-(4-Metoxyphenyl)-3-(4-tert-butylphenyl)propan-1,3-dion und 2-(4'-Diethylamino-2'-hydroxybenzoyl) benzoesäure-n-hexylester, ein Farbstoff der Klasse der Anthrachinon-Farbstoffe der Polyamidformmasse zugemischt ist.

14. Mit der Polyamidformmassen-Schmelze gemäss einem der Ansprüche 7 bis 13 hergestellte transparente Kunststoff-Formteile mit einer Lichttransmission gemessen nach ASTM 1003 bei 2 mm Formteildicke von mindestens 75 %, **dadurch gekennzeichnet, dass** die Transmission dieser Formteile für Licht mit einer Wellenlänge von 400 nm bei 2 mm Formteildicke weniger als 20 % beträgt.

15. Kunststoff-Formteile gemäss Anspruch 14, **dadurch gekennzeichnet, dass** die Transmission dieser Formteile für Licht mit einer Wellenlänge von 400 nm weniger als 10 % beträgt.

16. Kunststoff-Formteile gemäss Anspruch 14, **dadurch gekennzeichnet, dass** die Transmission dieser Formteile für Licht mit einer Wellenlänge von 400 nm weniger als 5 % beträgt.

17. Kunststoff-Formteile gemäss Anspruch 14, **dadurch gekennzeichnet, dass** die Transmission dieser Formteile für Licht mit einer Wellenlänge von 400 nm weniger als 1 % beträgt.

**Claims**

1. A method for producing transparent polyamide moulded parts with a light transmission of at least 75% as measured according to ASTM 1003 at 2 mm thickness of the moulded part and a transmission of less than 20% of light with a wavelength of 400 nm at 2 mm thickness of the moulded part, **characterized in that** at least one UV absorber is incorporated into a molten polyamide moulding composition that can be processed thermoplastically, which UV absorber is selected from a group consisting of 1-(4-methoxyphenyl)-3-(4-tert-butylphenyl)-propane-1,3-dione and 2-(4'-diethylamino-2'-hydroxybenzoyl) benzoic acid n-hexyl ester, as a result of which said molten polyamide moulding composition, which comprises at least one of the UV absorbers, does not cause any visible deposit formation on surfaces with which it comes into contact during the production or processing of transparent polyamide moulded parts.

2. Method according to claim 1, **characterized in that** the at least one UV absorber is a mixture of 1-(4-methoxyphenyl)-3-(4-tert-butylphenyl)-propane-1,3-dione and 2-(4'-diethylamino-2'-hydroxybenzoyl) benzoic acid n-hexyl ester.

3. Method according to one of the preceding claims, **characterized in that** at least one further UV absorber is admixed to the at least one UV absorber, said further UV absorber being selected from a group which is formed from non-chlorinated hydroxyphenylbenztriazoles, aminohydroxybenzoyl benzoic acid esters and dibenzoylmethanes.

4. Method according to one of the preceding claims, **characterized in that** a surface formed as the inner wall of a mould is free from visible deposit formation even after more than 250 processing cycles with the molten polyamide moulding composition comprising the at least one UV absorber.

5. Method according to one of the claims 1 to 3, **characterized in that** the surface with which the molten polyamide moulding composition comes into contact is the surface of a plasticising screw, a mould and a cooling roll.

6. Method according to one of the preceding claims, **characterized in that** the transparent polyamide moulded parts are selected from a group which comprises solar lenses, corrective lenses, non-corrective lenses, lenses for spectacles, parts of spectacles, protective goggles, windowpanes and protective panes, visors, displays, watch glasses, device housings, lamp covers, lenses for optical devices and systems, filters and films.

7. A molten polyamide moulding composition that can be processed thermoplastically, comprising at least one UV absorber selected from a group consisting of 1-(4-methoxyphenyl)-3-(4-tert-butylphenyl)-propane-1,3-dione and 2-(4'-diethylamino-2'-hydroxybenzoyl) benzoic acid n-hexyl ester, **characterized in that** the molten polyamide moulding composition is formed from a transparent polyamide, a mixture of transparent polyamides, or a blend of transparent polyamides with at least one semicrystalline polyamide, wherein the transparent polyamide is formed from:

(a) at least one diamine, selected from a group which consists of ethylenediamine, butanediamine, hexamethylenediamine, trimethylhexamethylenediamine, methylpentanediamine, bis(aminocyclohexyl) methane and its alkyl derivatives, bis(aminocyclohexyl) propane and its alkyl derivatives, isophoronediamine, norbornanediamine, bis(aminomethyl) norbornane, xylylenediamine, bis(aminomethyl) cyclohexane and its alkyl derivatives, and

(b) at least one dicarboxylic acid selected from the group which consists of butanedioic acid, glutaric acid, adipinic acid, pimellic acid, suberic acid, azelaic acid, sebacic acid, undecanedioic acid, dodecanedioic acid, brassylic acid, tetradecanedioic acid, pentadecanoic acid, hexadecanoic acid, heptadecanoic acid, octadecanoic acid, nonadecanoic acid, eicosanoic acid, japanic acid, cyclohexanedicarboxylic acid, dimer fatty acid with 36 or 44 C-atoms, isophthalic acid, terephthalic acid, naphthalene dicarboxylic acid, and optionally of

(c) lactams with 4 to 15 C-atoms and/or $\alpha,\omega$-amino acids with 4 to 15 C-atoms.

8. Molten polyamide moulding composition according to claim 7, **characterized in that** the at least one semicrystalline polyamide is selected from a group which is formed from PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 66/6, PA 6/66/12, PA 6/12, PA 11, PA 12, PA 912, PA 1212, 6T/6I, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, polyetheramides, polyetheresteramides and polyesteramides or their mixtures or copolymers.

9. Molten polyamide moulding composition according to one of the claims 7 or 8, **characterized in that** the diamine is selected from a group which comprises hexamethylenediamine, trimethylhexamethylenediamine, 2-methyl-1,5-pentanediamine, bis(4-amino-3-methyl-cyclohexyl) methane, bis(4-aminocyclohexyl) methane, isophoronediamine, norbornanediamine, m-xylylenediamine and 1,3-bis(aminomethyl) cyclohexane.

10. Molten polyamide moulding composition according to one of the claims 7 to 9, **characterized in that** the dicarboxylic acid is selected from a group which comprises adipinic acid, azelaic acid, sebacic acid, 1,12-dodecanedioic acid, brassylic acid, 1,14-tetradecanedioic acid, 1,15-pentadecanoic acid, 1,16-hexadecanoic acid, 1,18-octadecanoic acid, 1,3-cyclohexanedicarboxylic acid, 1,4-cyclohexanedicarboxylic acid, dimer fatty acid with 36 or 44 C-atoms, isophthalic acid, terephthalic acid, and 2,6-naphthalenedicarboxylic acid.

11. Molten polyamide moulding composition according to one of the claims 7 to 10, **characterized in that** the lactams respectively $\alpha,\omega$-amino acids comprise 4, 6, 7, 8, 11 or 12 C-atoms.

12. Molten polyamide moulding composition according to one of the claims 7 to 11, **characterized in that** the transparent polyamides are selected from the group PA 6I/6T/6NDC/MACMI/MACMT/MACMNDC, PA 6I/6T/6NDC, PA MXDI/6I, PA MXDI/MXDT/6I/6T, PA 6I, PA 6I/6T, PA MXDI/12I, PA MXDI, PA MACM9, PA MACM10, PA MACM11, PA MACM12, PA MACM13, PA MACM 14, PA MACM 15, PA MACM16, PA MACM 17, PA MACM18, PA 6-3-T, PA MACMI/12, PA MACM6/12, PA MACMT/12, PA MACMI/MACMNDC, PA MACMT/MACMNDC, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, and PA 6I/6T/MACMI/MACMT/MACM12/612, wherein optionally the MACM is replaced partly or entirely by PACM and/or the $\omega$-laurolactam is replaced partly or entirely by $\varepsilon$-caprolactam and/or $\alpha,\omega$-aminoundecanoic acid.

13. Molten polyamide moulding composition according to one of the claims 7 to 12, **characterized in that** a dye of the class of anthraquinone dyes is added to the polyamide moulding composition together with the at least one UV absorber selected from the group consisting of 1-(4-methoxyphenyl)-3-(4-tert-butylphenyl)-propane-1,3-dione and 2-(4'-diethylamino-2'-hydroxybenzoyl) benzoic acid n-hexyl ester.

14. Transparent plastic moulded parts produced with the molten polyamide moulding composition according to one of the claims 7 to 13 with a light transmission of at least 75% measured according to ASTM 1003 at 2 mm thickness of the moulded part, **characterized in that** the transmission of said moulded parts for light with a wavelength of 400 nm at 2 mm thickness of the moulded part is less than 20%.

15. Plastic moulded parts according to claim 14, **characterized in that** the transmission of these moulded parts for light with a wavelength of 400 nm is less than 10%.

**16.** Plastic moulded parts according to claim 14, **characterized in that** the transmission of these moulded parts for light with a wavelength 400 nm is less than 5%.

**17.** Plastic moulded parts according to claim 14, **characterized in that** the transmission of these moulded parts for light with a wavelength of 400 nm is less than 1%.

**Revendications**

**1.** Procédé pour fabriquer des pièces moulées en polyamide transparentes avec une transmission de la lumière mesurée conformément à ASTM 1003 avec une épaisseur de la pièce moulée de 2 mm d'au moins 75 % et une transmission de la lumière avec une longueur d'onde de 400 nm et une épaisseur de pièce moulée de 2 mm inférieure à 20 %, **caractérisé en ce qu'**il est incorporé dans une matière à mouler de polyamide à l'état fondu pouvant être traitée de manière thermoplastique au moins un absorbeur UV qui est choisi à partir d'un groupe composé de 1-(4-métoxyphényl)-3-(4-tert-butylphényl)propan-1,3-dione et n-hexylester d'acide 2-(4'-diéthylamino-2'-hydroxybenzoyl)-benzoïque, cette matière à mouler de polyamide à l'état fondu contenant au moins l'un des absorbeurs UV ci-dessus ne provoquant aucun dépôt visible sur les surfaces avec lesquelles elle entre en contact pendant la fabrication ou le traitement des pièces moulées en polyamide transparentes.

**2.** Procédé selon la revendication 1, **caractérisé en ce que** le au moins un absorbeur UV est un mélange de 1-(4-méthoxyphényl)-3-(4-tert-butylphényl-propan-1,3-dione et de n-hexylester d'acide 2-(4'-diéthylamino-2'-hydroxybenzoyl)-benzoïque.

**3.** Procédé selon l'une des revendications précédentes, **caractérisé en ce qu'**il est mélangé à au moins un absorbeur UV au moins un autre absorbeur UV qui est choisi à partir d'un groupe composé de hydroxyphénylbenzotriazoles non chlorés, d'esters d'acide aminohydroxybenzoyl-benzoïque et de dibenzoylméthanes.

**4.** Procédé selon l'une des revendications précédentes, **caractérisé en ce qu'**une surface réalisée en tant que paroi intérieure d'outil, est exempte de dépôt visible même après plus de 250 cycles de travail avec la matière à mouler de polyamide à l'état fondu contenant le au moins un absorbeur UV.

**5.** Procédé selon l'une des revendications 1 à 3, **caractérisé en ce que** la surface avec laquelle la matière à mouler de polyamide à l'état fondu entre en contact est la surface d'une vis de plastification, d'un outil et d'un cylindre de refroidissement.

**6.** Procédé selon l'une des revendications précédentes, **caractérisé en ce que** les pièces moulées en polyamide transparentes sont choisies à partir d'un groupe comprenant des lentilles de soleil, lentilles correctrices, lentilles non correctrices, lentilles pour lunettes, montures de lunettes, lunettes de protection, plaques de vue et protection, visières, écrans, verres de montre, boîtiers, vitres pour lampes, lentilles pour appareils et systèmes, filtres et feuilles optiques.

**7.** Matière à mouler de polyamide à l'état fondu pouvant être traitée de façon thermoplastique comprenant au moins un absorbeur UV choisi parmi un groupe composé de 1-(4-méthoxyphényl)-3-(4-tert-butylphényl-propan-1,3-dione et de n-hexylester d'acide 2-(4'-diéthylamino-2'-hydroxybenzoyl)-benzoïque, **caractérisée en ce que** la matière à mouler de polyamide à l'état fondu est formée d'un polyamide transparent, d'un mélange de polyamides transparents ou d'un mélange de polyamides transparents avec au moins un polyamide semi-cristallin, le polyamide transparent étant composé de :

(a) au moins une diamine choisie à partir d'un groupe composé d'éthylènediamine, butanediamine, hexaméthylènediamine, triméthylhexaméthylènediamine, méthylpentanediamine, bis(aminocyclohexyl)méthane et ses dérivés alkyles, bis(aminocyclohexyl)propane et ses dérivés alkyles, isophorondiamine, norbornanediamine, bis(aminométhyl)norbornane, xylylènediamine, bis(aminométhyl)cyclohexane et ses dérivés alkyles ; et
(b) au moins un acide dicarboxylique choisi parmi le groupe composé de l'acide succinique, acide glutarique, acide adipique, acide pimélique, acide subérique, acide azélaïque, acide sébacique, acide undécanoïque, acide dodécanoïque, acide brassylique, acide tétradécanoïque, acide pentadécanoïque, acide hexadécanoïque, acide heptadécanoïque, acide octadécanoïque, acide nonadécanoïque, acide eicosanedioïque, acide japanique, acide cyclohéxanedicarboxylique, acide gras dimère avec 36 ou 44 atomes C, acide isophtalique, acide téréphtalique, acide naphtalènedicarboxylique ; et en option de

(C) de lactames avec 4 à 15 atomes C et/ou des acides aminés α, ω avec 4 à 15 atomes C.

8. Matière à mouler de polyamide à l'état fondu selon la revendication 7, **caractérisée en ce que** le au moins un polyamide semi- cristallin est choisi à partir d'un groupe composé de PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 66/6, PA 6/66/12, PA 6/12, PA 11, PA 12, PA 912, PA 1212, 6T/61, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, polyétheramides, polyétheresteramides et des polyesteramides ou des mélanges ou des copolymères de ces derniers.

9. Matière à mouler de polyamide à l'état fondu selon l'une des revendications 7 ou 8, **caractérisée en ce que** la diamine est choisie à partir d'un groupe comprenant l'hexaméthylènediamine, triméthylhexaméthylènediamine, 2-méthyl-1,5-pentanediamine, bis(4-amino-3-méthyl-cyclohexyl)méthane, bis(4-amino-cyclohexyl)méthane, isophorondiamine, norbornanediamine, m-xyxylènediamine et 1,3-bis(aminométhyl)cyclohexane.

10. Matière à mouler de polyamide à l'état fondu selon l'une des revendications 7 à 9, **caractérisée en ce que** l'acide dicarboxylique est choisi à partir d'un groupe comprenant l'acide adipique, acide azélaïque, acide sébacique, acide 1,12-dodécanedioïque, acide brassylique, acide 1,14-tétradécanedioïque, acide 1,15-pentadécanedioïque, acide 1,16-hexadécanedioïque, acide 1,18-octadécanedioïque, acide 1,3-cyclohexanedicarboxylique, acide 1,4-cyclohexanedicarboxylique, acide gras dimère avec 36 ou 44 atomes C, acide isophtalique, acide téréphtalique et acide 2,6-naphtalènedicarboxylique.

11. Matière à mouler de polyamide à l'état fondu selon l'une des revendications 7 à 10, **caractérisée en ce que** les lactames ou bien les acides aminés α, ω présentent 4, 6, 7, 8, 11 ou 12 atomes C.

12. Matière à mouler de polyamide à l'état fondu selon l'une des revendications 7 à 11, **caractérisée en ce que** les polyamides transparents sont choisis à partir du groupe PA 61/6T/6NDC/MACMI/MACMT/MACMNDC, PA 61/6T/6NDC, PA MXDI/6I, PA MXDI/MXDT/6I/6T, PA 6I, PA 6I/6T, PA MXDI/12I, PA MXDI, PA MACM9, PA MACM10, PA MACM11, PA MACM12, PA MACM13, PA MACM14, PA MACM15, PA MACM16, PA MACM17, PA MACM18, PA 6-3-T, PA MACMI/12, PA MACM6/12, PA MACMT/12, PA MACMI/MACMNDC, PA MACMT/MACMNDC, PA MACMI/MACM36, PA MACMT/MACM36, PA MACMI/MACMT/12, PA 61/MACMI/12, PA 61/6T/MACMI/MACMT, PA 6I/6T/MACMI/MACMT/12 et PA 61/6T/MACMI/MACMT/MACM12/612, le MACM étant le cas échéant remplacé totalement ou partiellement par PACM et/ou le ω-laurolactame étant remplacé totalement ou partiellement par ε-caprolactame et/ou par acide a,ω-aminoundécanoïque.

13. Matière à mouler de polyamide à l'état fondu selon l'une des revendications 7 à 12, **caractérisée en ce qu'**il est mélangé avec au moins un absorbeur UV choisi à partir du groupe composé de 1-(4-métoxyphényl)-3-(4-tert-butylphényl)propan-1,3-dione et n-hexylester d'acide 2-(4'-diéthylamino-2'-hydroxybenzoyl)-benzoïque, un colorant de la classe des colorants anthraquinoniques à la matière à mouler de polyamide.

14. Pièces moulées en plastique transparente fabriquée avec la matière à mouler de polyamide à l'état fondu selon l'une des revendications 7 à 13, avec une transmission de la lumière mesurée conformément à ASTM 1003 avec une épaisseur de pièce moulée de 2 mm d'au moins 75 %, **caractérisée en ce que** la transmission de ces pièces moulées pour la lumière avec une longueur d'onde de 400 nm et une épaisseur de pièce moulée de 2 mm est inférieure à 20 %.

15. Pièces moulées en plastique selon la revendication 14, **caractérisée en ce que** la transmission de ces pièces moulées pour la lumière avec une longueur d'onde de 400 nm est inférieure à 10 %.

16. Pièces moulées en plastique selon la revendication 14, **caractérisée en ce que** la transmission de ces pièces moulées pour la lumière avec une longueur d'onde de 400 nm est inférieure à 5 %.

17. Pièces moulées en plastique selon la revendication 14, **caractérisée en ce que** la transmission de ces pièces moulées pour la lumière avec une longueur d'onde de 400 nm est inférieure à 1 %.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 3824455 B
- US 6441119 B1
- US 6673888 B2
- US 7009025 B2

**In der Beschreibung aufgeführte Nicht-Patentliteratur**

- **WARWICK L. ; MORISON, M.D.** Photosensitivity. *The New England Journal of Medicine. Boston,* 11. Marz 2004, vol. 350 (11), 1111-1117